# EUROPÄISCHE PATENTANMELDUNG

(11) **EP 2 974 635 A1**
(43) Veröffentlichungstag der Anmeldung: **20.01.2016**
(21) Anmeldenummer: 15153444.3
(22) Anmeldetag: 02.02.2015
(51) Int. Cl.: A47J 36/32, A47J 27/08

(54) **Fehlererkennung bei einem Schnellkochtopf**

(71) Anmelder: Kuhn Rikon AG, 8486 Rikon im Tösstal (CH)
(72) Erfinder: Haggenmacher, Nicola, 6632 Vogorno (CH); Leukart, Holger, 8486 Rikon (CH)
(74) Vertreter: Detken, Andreas

(57) **Zusammenfassung**

Es wird ein Verfahren zur Überwachung eines Garvorgangs in einem Schnellkochtopf vorgeschlagen, bei dem mit einer digitalen Überwachungsvorrichtung Temperaturdaten überwacht werden, um festzustellen, ob ein Fehlerzustand vorliegt. Um die Zuverlässigkeit der Fehlererkennung zu verbessern, wird der Verlauf des Temperaturgradienten bei der Feststellung, ob ein Fehlerzustand vorliegt, berücksichtigt. Dabei kann die Abweichung der Temperaturdaten, des Temperaturgradienten oder einer hiervon abgeleiteten Grösse relativ zu einem Modellverlauf bestimmt werden, und der Verlauf dieser Abweichung kann bei der Feststellung, ob ein Fehlerzustand vorliegt, als Kriterium berücksichtigt werden.

## Beschreibung

### TECHNISCHES GEBIET

Die vorliegende Erfindung befasst sich allgemein mit der Erkennung von Fehlerzuständen bei der Zubereitung von Speisen in einem Schnellkochtopf. Insbesondere betrifft die vorliegende Erfindung ein Verfahren zur Überwachung eines Garvorgangs in einem Schnellkochtopf, in dem ein Gargut mit Wasser bzw. Wasserdampf bei erhöhter Temperatur und erhöhtem Druck gegart wird, ein entsprechendes Computerprogramm, eine digitale Überwachungsvorrichtung, die dazu ausgebildet ist, das Verfahren auszuführen, sowie ein Kit aus einer solchen Überwachungsvorrichtung und einer Temperaturmesseinheit.

### STAND DER TECHNIK

Aus der WO 2013/064348 A1 ist ein Verfahren zur Überwachung eines Garvorgangs bekannt, bei dem ein den Garvorgang beeinflussender Parameter wie Temperatur oder Druck gemessen wird und drahtlos an eine Überwachungsvorrichtung gesendet wird. Die Überwachungsvorrichtung kann ein Smartphone sein. Die gemessenen Daten werden dort z.B. dazu herangezogen, einen optimalen Einlegezeitpunkt für ein zweites Lebensmittel zu ermitteln. Bei Abweichungen zwischen einem Istwert des gemessenen Parameters und einem Sollwert (z.B. bei zu geringer Temperatur) kann die Überwachungsvorrichtung eine Handlungsanweisung an den Benutzer ausgeben (z.B. die Temperatur zu erhöhen).

In DE 10 2008 051 265 A1 wird ein Verfahren zur Überwachung eines Garvorgangs offenbart, bei dem der Temperaturverlauf im Schnellkochtopf aufgezeichnet wird. Wenn eine Situation eintritt, die eine Modifikation des Garprozesses seitens des Benutzers erfordert, wird dies durch eine Ausgabeeinrichtung angezeigt. Derartige Situationen sind z.B. eine zu niedrige oder zu hohe Temperatur, die Eingabe eines falschen Herdtyps, oder eine zwischenzeitliche Unterbrechung der Wärmezufuhr. Solche Abweichungen von einem erwünschten Zustand werden im Folgenden allgemein als Fehlerzustände bezeichnet.

Bei einem Garprozess in einem Schnellkochtopf kann eine Vielzahl von weiteren Fehlerzuständen auftreten, die vom Benutzer nicht zuverlässig erkannt werden können. Dazu gehören z.B. Trockenstart (d.h. Aufheizen, ohne dass sich Wasser im Kochtopf befindet), Trockenlauf (d.h., dass alles Wasser verdampft ist), Anbrennen, Undichtigkeit oder verfrühte Ventilschliessung. Auch können Fehlbedienungen durch den Benutzer vorkommen, z.B. vorzeitiges Öffnen des Deckels.

Insgesamt gibt es einen Bedarf, auch für solche Fehlerzustände und Fehlbedienungen eine zuverlässige Erkennung zu ermöglichen. Zudem gibt es einen Bedarf, die Erkennungssicherheit von Fehlerzuständen zu verbessern, für die im Stand der Technik schon eine automatische Erkennung vorgeschlagen wurde, wie z.B. der oben genannte Fehlerzustand "Unterbrechung der Wärmezufuhr".

### DARSTELLUNG DER ERFINDUNG

Es ist eine Aufgabe der vorliegenden Erfindung, ein Verfahren anzugeben, mit dem Fehlerzustände und Fehlbedienungen bei einem Schnellkochtopf zuverlässig erkannt werden können.

Diese Aufgabe wird durch ein Verfahren zur Überwachung eines Garvorgangs in einem Schnellkochtopf mit den Merkmalen des Anspruchs 1 gelöst. Vorteilhafte Weiterbildungen dieses Verfahrens sind in den abhängigen Ansprüchen angegeben.

Das erfindungsgemässe Verfahren zur Überwachung eines Garvorgangs in einem Schnellkochtopf, in dem ein Gargut mit Wasser und/oder Wasserdampf bei erhöhter Temperatur und erhöhtem Druck gegart wird, umfasst:
Empfangen von Temperaturdaten, die dem Verlauf der Temperatur im Schnellkochtopf entsprechen;
Überwachung der Temperaturdaten mit einer digitalen Überwachungsvorrichtung, um festzustellen, ob ein Fehlerzustand vorliegt; und
Ausgabe einer Fehlermeldung durch die digitale Überwachungsvorrichtung, wenn der Fehlerzustand festgestellt wird,
wobei bei der Überwachung der Temperaturdaten ein Temperaturgradient aus den Temperaturdaten berechnet wird (vorzugsweise fortlaufend berechnet wird), und wobei der Verlauf des so berechneten Temperaturgradienten bei der Feststellung, ob ein Fehlerzustand vorliegt, berücksichtigt wird.

Erfindungsgemäss wird zur Fehlererkennung also nicht nur der Temperaturverlauf als Kriterium herangezogen, sondern auch der Verlauf des Temperaturgradienten, d.h. der ersten Ableitung der Temperatur nach der Zeit. Dadurch wird es möglich, eine differenziertere, teils auch schnellere, und dadurch zuverlässigere Fehlererkennung durchzuführen. So äussern sich manche Fehler weitaus deutlicher in Änderungen des Temperaturgradienten als in Änderungen der eigentlichen Temperatur (die ja das zeitliche Integral des Gradienten darstellt), wodurch diese Fehler schneller und zuverlässiger erkannt werden können, wenn der zeitliche Verlauf des Temperaturgradienten und nicht nur der zeitliche Verlauf der eigentlichen Temperatur überwacht wird.

Mit dem Ausdruck "zeitlicher Verlauf des Temperaturgradienten" ist gemeint, dass nicht nur punktuell ein einzelner Wert des Temperaturgradienten berücksichtigt wird, sondern dass bei der Feststellung, ob ein Fehlerzustand vorliegt, mindestens zwei Werte des Temperaturgradienten zu verschiedenen Zeitpunkten verglichen werden. Konkret kann dies bedeuten, dass eine Änderung des Temperaturgradienten festgestellt und/oder quantifiziert wird, insbesondere, dass eine zeitliche Ableitung des Temperaturgradienten (d.h. die zweite Ableitung der Temperatur nach der Zeit) berechnet wird. Insofern kann das erfindungsgemässe Verfahren die Berechnung der zweiten Ableitung der Temperatur nach der Zeit umfassen, wobei der Wert und/oder der Verlauf dieser zweiten Ableitung bei der Feststellung, ob ein Fehlerzustand vorliegt, berücksichtigt werden. Es können auch höhere Ableitungen (dritte, vierte usw. Ableitung) berechnet und berücksichtigt werden.

Die Berechnung der Ableitungen kann in üblicher Weise durch eine diskrete Näherung erfolgen. So kann z.B. der Temperaturgradient bestimmt werden, indem eine Temperaturdifferenz zwischen zwei Zeitpunkten bestimmt wird und diese Temperaturdifferenz durch die Zeitdifferenz dividiert wird. Wenn die Zeitdifferenz als Zeiteinheit betrachtet wird, kann die Division entfallen. Die Zeitdifferenz sollte klein auf der Zeitskala des Kochvorgangs sein, z.B. kleiner als 30 Sekunden, bevorzugt zwischen 1 und 10 Sekunden. Zusätzlich können übliche Massnahmen zur Glättung des Verlaufs der Ableitung, wie die Berechnung eines zeitgewichteten Mittels von Werten der betreffenden Ableitung, vorgesehen werden.

Vorzugsweise wird bei der Überwachung der Temperaturdaten (bevorzugt fortlaufend) ein Mass für die Abweichung der Temperaturdaten, des Temperaturgradienten (d.h. der ersten Ableitung der Temperatur nach der Zeit), der zeitlichen Ableitung des Temperaturgradienten (d.h. der zweiten Ableitung der Temperatur nach der Zeit) und/oder einer hiervon abgeleiteten Grösse relativ zu einem Modellverlauf (z.B. das gegebenenfalls zeitgewichtete mittlere Abweichungsquadrat vom Modellverlauf, im Folgenden auch als Varianz bezeichnet) bestimmt, und der Verlauf dieser Abweichung wird bei der Feststellung, ob ein Fehlerzustand vorliegt, als Kriterium berücksichtigt. Der Modellverlauf kann z.B. ein linearer Verlauf sein, der durch eine lineare Regression aus einem bestimmten Satz von Messdaten aus der Vergangenheit bestimmt wurde (allgemeiner: ein Verlauf vorgegebener Art, der z.B. durch die Methode der kleinsten Quadrate, d.h. Least Squares Estimation, aus Messdaten der Vergangenheit bestimmt wurde). Die Abweichung bzw. das (zeitgewichtete) mittlere Abweichungsquadrat der aktuellen Messdaten von diesem Modellverlauf zeigt an, wie gut die aktuellen Messdaten dem Modellverlauf entsprechen. Wenn die Abweichung stark ansteigt, zeigt dies an, dass die aktuellen Messdaten beginnen, vom Modellverlauf abzuweichen. Auch hiermit ist häufig eine frühere und zuverlässigere Erkennung von Fehlerzuständen möglich, als wenn allein die Temperaturdaten als solche betrachtet werden.

Mit dem Verfahren können die Temperaturdaten insbesondere auf das Vorliegen mindestens eines der folgenden Fehlerzustände überwacht werden:
Trockenstart;
Temperaturstagnation während einer Aufheizphase;
Temperatureinbruch während einer Nachheizphase;
Deckelöffnung;
Ventilöffnung;
vorzeitige Ventilschliessung während einer Aufheizphase;
Nichtbefolgen von Handlungsanweisungen durch den Benutzer.

Einige dieser Fehlerzustände konnten im Stand der Technik bislang überhaupt nicht automatisch festgestellt werden. Gerade bei diesen Fehlerzuständen ist es für eine zuverlässige und schnelle Erkennung von grossem Vorteil, dass neben dem Temperaturverlauf auch der Verlauf des Temperaturgradienten und gegebenenfalls der Abweichung gegenüber einem Modellverlauf überwacht werden. Für andere Fehlerzustände wurde im Stand der Technik zwar schon eine automatische Erkennung vorgeschlagen, diese Erkennung kann aber erheblich verbessert werden, indem der Verlauf des Temperaturgradienten und gegebenenfalls der Abweichung gegenüber einem Modellverlauf berücksichtigt wird.

Die Fehlermeldungen können in geeigneter Form durch die digitale Überwachungsvorrichtung an den Benutzer ausgegeben werden, z.B. in visueller und/oder akustischer Form. Die Fehlermeldungen können mit Handlungsanweisungen an den Benutzer verbunden sein, z.B. "bitte prüfen, ob Herd eingeschaltet ist", "bitte Heizleistung reduzieren", "bitte prüfen, ob genügend Wasser eingefüllt ist", "bitte Ventil prüfen" usw. Die Handlungsanweisungen können gegebenenfalls mit Anweisungen zur genaueren Eingrenzung der Fehlerquelle und/oder zur Behebung des Fehlers verbunden sein, wobei diese Anweisungen vom ermittelten Fehlerzustand abhängen.

In Weiterbildungen ist es aber auch denkbar, dass die Überwachungsvorrichtung digital mit einer Steuerungsvorrichtung für eine Heizquelle für den Schnellkochtopf (z.B. mit einer digitalen Herdsteuerung) kommuniziert und die Fehlermeldungen oder davon abgeleitete Handlungsanweisungen in digitaler Form an diese Steuerungsvorrichtung ausgibt. Die Fehlermeldungen bzw. Handlungsanweisungen können dann die Steuerungsvorrichtung dazu veranlassen, automatisch einen Regelungseingriff an der Heizquelle vorzunehmen, beispielsweise automatisch die Heizleistung zu reduzieren, zu erhöhen oder die Heizquelle ganz abzuschalten. Auf diese Weise entsteht ein geschlossener Regelkreis, und das Verfahren kann insofern nicht nur zur reinen Überwachung des Schnellkochtopfs dienen, sondern auch zur eigentlichen Regelung der Temperatur im Schnellkochtopf.

Ein Trockenstart kann insbesondere anhand des Kriteriums festgestellt werden, dass sich der Temperaturgradient innerhalb einer vorgegebenen Zeitdauer nach Beginn des Garvorgangs nicht verringert, denn falls sich genügend Flüssigkeit im Schnellkochtopf befindet, wird erwartet, dass der Temperaturgradient nach einem anfänglichen steilen Anstieg wieder etwas absinkt. Dies wird nachstehend noch näher anhand der Zeichnungen erläutert.

Mit dem Ausdruck "anhand eines Kriteriums etwas feststellen" ist gemeint, dass das betreffende Kriterium bei der Ermittlung des Fehlerzustands alleine oder zusammen mit anderen Kriterien herangezogen wird. Das genannte Kriterium muss also nicht zwingend das einzige Kriterium für das Vorliegen des Fehlerzustands sein. Es können kumulativ weitere Kriterien geprüft werden, bevor auf den Fehlerzustand geschlossen wird.

Eine verfrühte Ventilschliessung während einer Aufheizphase kann insbesondere anhand des Kriteriums festgestellt werden, dass sich der Temperaturgradient innerhalb eines Ventilschliessungsintervalls nicht verringert, denn bei korrekter Ventilschliessung wird erwartet, dass der Temperaturgradient in diesem Intervall deutlich sinkt.

Eine Temperaturstagnation unterhalb des Ventilschliessungsintervalls während einer Aufheizphase kann insbesondere anhand des Kriteriums festgestellt werden, dass die Temperatur seit Beginn der Aufheizphase um einen vorgegebenen Temperaturdifferenzschwellwert angestiegen ist, aber sich noch unterhalb des Ventilschliessungsintervalls befindet, und dass mindestens eines der folgenden Kriterien erfüllt ist:
(a) der Temperaturgradient ist kleiner als ein erster Gradientenschwellwert; und/oder
(b) der Temperaturgradient ist kleiner als ein zweiter Gradientenschwellwert, welcher grösser ist als der erste Gradientenschwellwert, und gleichzeitig weist die Temperatur eine Abweichung relativ zu einem Modellverlauf auf, welche grösser als ein Abweichungsschwellwert ist.

Eine Temperaturstagnation innerhalb des Ventilschliessungsintervalls während einer Aufheizphase kann insbesondere anhand des Kriteriums festgestellt werden, dass sich die Temperatur innerhalb des Ventilschliessungsintervalls befindet, und dass mindestens eines der folgenden Kriterien erfüllt ist:
(a) der Temperaturgradient ist kleiner als ein erster Gradientenschwellwert; und/oder
(b) der Temperaturgradient ist kleiner als ein zweiter Gradientenschwellwert, welcher grösser ist als der erste Gradientenschwellwert, und gleichzeitig weist die Temperatur eine Abweichung gegenüber einem Modellverlauf auf, welche grösser als ein Abweichungsschwellwert ist.

Eine Temperaturstagnation oberhalb des Ventilschliessungsintervalls während einer Aufheizphase kann insbesondere anhand des Kriteriums festgestellt werden, dass sich die Temperatur oberhalb des Ventilschliessungsintervalls befindet, und dass mindestens eines der folgenden Kriterien erfüllt ist:
(a) der Temperaturgradient ist kleiner als ein erster Gradientenschwellwert;
(b) der Temperaturgradient ist kleiner als ein zweiter Gradientenschwellwert, welcher grösser ist als der erste Gradientenschwellwert, und gleichzeitig weist die Temperatur eine Abweichung gegenüber einem Modellverlauf auf, welche grösser als ein Abweichungsschwellwert ist; und/oder
(c) der Temperaturgradient ist kleiner als ein vorgegebener Bruchteil eines zuvor bestimmten Temperaturgradienten unterhalb der Ventilschliessungstemperatur.

Ein Temperatureinbruch während einer Nachheizphase kann insbesondere festgestellt werden, indem die Überwachung der Temperaturdaten und des Temperaturgradienten eine Ermittlung eines Schwankungsmusters der Temperatur bei nominell konstanter Heizleistung umfasst, und indem das Kriterium überwacht wird, dass die Temperatur bei nominell konstanter Heizleistung um einen Betrag absinkt, der grösser ist als ein sich aus dem Schwankungsmuster ergebender Schwellwert.

Eine Ventil- oder Deckelöffnung kann insbesondere anhand eines der folgenden Kriterien festgestellt werden:
(a) die Temperatur sinkt innerhalb einer Aufheiz- oder Nachheizphase um einen Betrag ab, der grösser ist als ein vom Betriebszustand abhängiger Schwellwert, wobei der (negative) Temperaturgradient einen Betrag aufweist, der grösser ist als ein vorbestimmter Schwellwert; oder
(b) der Temperaturgradient ist innerhalb einer Abkühlphase negativ und weist einen Betrag auf, der grösser ist als ein vorbestimmter Schwellwert.

Das Nichtbefolgen von Handlungsanweisungen durch den Benutzer kann dadurch detektiert werden, dass der Verlauf des Temperaturgradienten von einem erwarteten Verlauf des Temperaturgradienten abweicht. Wenn z.B. die Handlungsanweisung lautete "Heizleistung erhöhen", wird erwartet, dass der Temperaturgradient ansteigt; wenn kein Anstieg des Gradienten gemessen wird, kann daraus auf das Nichtbefolgen der Handlungsanweisung geschlossen werden. Wenn umgekehrt die Handlungsanweisung lautete "Heizung ganz abschalten", wird erwartet, dass der Temperaturgradient sinkt und negativ wird; wenn kein solches Absinken des Gradienten in den negativen Bereich gemessen wird, kann daraus auf das Nichtbefolgen der Handlungsanweisung geschlossen werden.

Bevorzugt ist die digitale Überwachungsvorrichtung ein portables elektronisches Gerät, das nicht drahtgebunden mit dem Schnellkochtopf verbunden ist. Insbesondere kann es sich bei dem portablen elektronischen Gerät um ein Smartphone, einen Tabletcomputer, einen Notebook-Computer, eine Smartwatch oder jede andere Art von mobilem Gerät mit digitalem Prozessor und mit einer Ein-/Ausgabevorrichtung zur Interaktion mit einem menschlichen Benutzer handeln.

Die Ermittlung der Temperaturdaten findet in diesem Fall räumlich getrennt von der eigentlichen Überwachung statt. Das Verfahren kann dazu insbesondere umfassen:
Erfassung der Temperaturdaten mittels einer Temperaturmessvorrichtung, die am Schnellkochtopf angebracht ist; und
drahtlose Übertragung der Temperaturdaten von der Temperaturmessvorrichtung an die digitale Überwachungsvorrichtung.

Die drahtlose Übertragung kann auf eine beliebige Weise erfolgen, z.B. optisch über eine Infrarotstrecke oder elektromagnetisch über eine Funkstrecke. Bevorzugt ist eine Funkstrecke. Dabei kann ein beliebiges Übertragungsprotokoll zum Einsatz kommen, z.B. das Wi-Fi™-Protokoll nach dem Standard IEEE 802.11 oder einem davon abgeleiteten Standard, oder das Bluetooth™-Protokoll nach dem Standard IEEE 802.15.1 oder einem davon abgeleiteten Standard (oder ein beliebiges anderes WPAN-Protokoll). Bevorzugt ist das Bluetooth™-Protokoll und hier insbesondere die Erweiterung Bluetooth™ 4.0 Low Energy, welche die sich bei der Überwachung eines Kochtopfs stellenden Anforderungen an Reichweite und Energieverbrauch sehr gut erfüllt. Eine Bluetooth™-Schnittstelle ist an nahezu allen modernen portablen elektronischen Geräten wie Smartphones, Tabletcomputern, Notebooks usw. vorhanden.

Die vorliegende Erfindung stellt zudem ein Computerprogramm mit Programmcode zur Durchführung des vorstehend beschriebenen Verfahrens, wenn das Computerprogramm in einer digitalen Überwachungsvorrichtung ausgeführt wird, zur Verfügung. Das Computerprogramm kann in beliebiger Form vorliegen, insbesondere als (kompilierter) Maschinencode, als Objektcode, als Sourcecode in einer kompilierbaren oder interpretierbaren Sprache usw. Er kann auf einem physischen Datenträger zur Verfügung gestellt werden, z.B. auf einer CD-ROM oder DVD-ROM, oder er kann auf einem oder mehreren Servern zum Download über ein Netzwerk angeboten werden, insbesondere zum Download über das Internet. Insbesondere kann das Computerprogramm in der Form eines Anwendungsprogramms (im Folgenden auch App genannt) vorliegen, das über das Internet herunterladbar ist, im Betriebssystem des portablen elektronischen Geräts aufgerufen werden kann und dort unmittelbar ausführbar ist.

Die vorliegende Erfindung stellt ausserdem eine digitale Überwachungsvorrichtung zur Überwachung eines Garvorgangs in einem Schnellkochtopf, in dem ein Gargut mit Wasser und/oder Wasserdampf unter erhöhtem Druck gegart wird, zur Verfügung. Die Überwachungsvorrichtung umfasst einen Speicher, in dem ein Computerprogramm geladen ist, welches Programmcode zur Durchführung des vorstehend beschriebenen Verfahrens in der digitalen Überwachungseinrichtung umfasst.

Dabei ist es bevorzugt, dass die Überwachungsvorrichtung eine drahtlose Datenkommunikationsschnittstelle umfasst, und dass das Computerprogramm ausserdem Programmcode zum Empfangen der Temperaturdaten über die drahtlose Datenkommunikationsschnittstelle aufweist.

Schliesslich stellt die vorliegende Erfindung auch ein Kit aus mindestens zwei Teilen zur Verfügung, wobei das Kit umfasst:
eine digitale Überwachungsvorrichtung der vorstehend angegebenen Art; und
eine Temperaturerfassungseinheit, die an einem Schnellkochtopf anbringbar ist und dazu ausgebildet ist, Temperaturdaten zu erfassen und die Temperaturdaten drahtlos an die drahtlose Datenkommunikationsschnittstelle der digitalen Überwachungsvorrichtung zu übertragen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Skizze zur Kommunikation zwischen einem Schnellkochtopf, einem Smartphone und einem Cloud-Server;
- Fig. 2: eine Explosionsdarstellung eines Temperaturerfassungsmoduls;
- Fig. 3: eine stark schematisches Blockdiagramm eines Smartphones;
- Fig. 4: einen schematischen Ablaufplan eines Garvorgangs mit einem Schnellkochtopf;
- Fig. 5: ein schematisches Flussdiagramm für die Fehlerüberwachung während des Garvorgangs;
- Fig. 6: einen normalen Temperaturverlauf während eines Garvorgangs auf einem Glaskeramikherd;
- Fig. 7: einen Vergleich zwischen einem normalen Temperaturverlauf (durchgezogene Linie) und einem Temperaturverlauf bei verzögertem Einschalten der Heizquelle (gestrichelte Linie);
- Fig. 8: einen Vergleich zwischen einem normalen Temperaturverlauf (durchgezogene Linie) und einem Temperaturverlauf bei Trockenstart mit nachträglichem Ablöschen (gestrichelte Linie);
- Fig. 9: einen Temperaturverlauf bei zwischenzeitlich ausgeschalteter Heizquelle;
- Fig. 10: Temperaturverläufe an Topfboden (gestrichelte Linie) und Topfdeckel (durchgezogene Linie) bei Trockenlauf;
- Fig. 11: einen Vergleich zwischen normalem Temperaturverlauf (durchgezogene Linie) und einem Temperaturverlauf bei verspäteter Ventilschliessung (gestrichelte Linie);
- Fig. 12: einen Vergleich zwischen einem normalen Temperaturverlauf (durchgezogene Linie) und einem Temperaturverlauf bei Undichtigkeit des Deckels nach der Ventilschliessung (gestrichelte Linie);
- Fig. 13: einen Temperaturverlauf bei Trockenlauf in einer Nachheizphase;
- Fig. 14: einen Temperaturverlauf bei wiederholter Deckelöffnung, zusammen mit dem Einfluss auf den Garverlauf; und
- Fig. 15: einen Vergleich zwischen einem normalen Temperaturverlauf (durchgezogene Linie) und einem Temperaturverlauf bei verfrühter Ventilschliessung (gestrichelte Linie).

### BESCHREIBUNG BEVORZUGTER AUSFÜHRUNGSFORMEN

### Funktionsprinzip

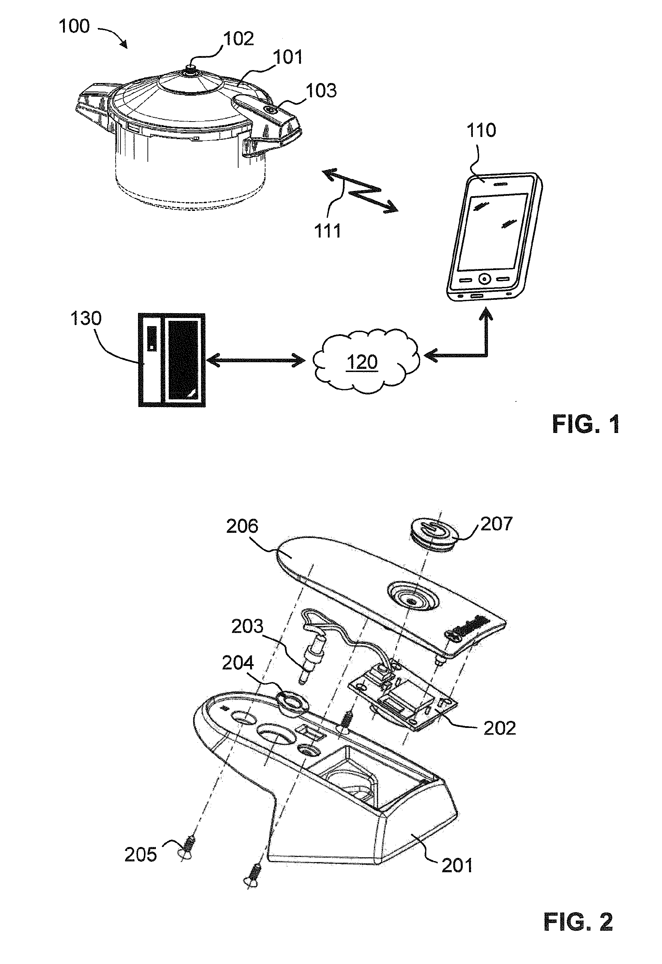

In der Fig. 1 ist schematisch illustriert, wie ein Schnellkochtopf 100 über eine drahtlose Kommunikationsverbindung 111 mit einem portablen elektronischen Gerät in Form eines Smartphones 110 kommuniziert. Bei der drahtlosen Kommunikationsverbindung handelt es sich bevorzugt um eine Funkverbindung nach dem Bluetooth™-Standard.

Der Schnellkochtopf 100 weist ein Temperaturerfassungsmodul 103 auf, das am Deckel 101 des Schnellkochtopfs 100 befestigt ist. Im vorliegenden Fall ist das Temperaturerfassungsmodul in einem der Handgriffe des Deckels integriert; es sind aber auch andere Anordnungen des Temperaturerfassungsmoduls am Deckel denkbar, z.B. im zentralen Deckelbereich, in welchem im vorliegenden Beispiel ein Druckanzeigestössel 102 angeordnet ist. Das Temperaturerfassungsmodul 103 weist einen Temperatursensor sowie eine Datenkommunikationseinheit auf, die dazu ausgebildet ist, die vom Temperatursensor gemessene Temperatur in an sich bekannter Weise zu erfassen und die erfassten Temperaturdaten nach dem Bluetooth-Standard an das Smartphone 110 zu übertragen. Das Smartphone 110 empfängt die drahtlos übertragenen Temperaturdaten und verarbeitet diese weiter. Dazu wird unter dem Smartphone-Betriebssystem (zum Beispiel iOS™ oder Android™) eine Anwendungssoftware (eine sogenannte App) ausgeführt, die die Temperaturdaten von der Bluetooth-Schnittstelle des Smartphones empfängt und weiterverarbeitet.

Um die App herunterzuladen, kann sich das Smartphone über ein drahtgebundenes und/oder drahtloses Netzwerk 120 (z.B. über ein drahtloses WLAN-Netzwerk, das drahtgebunden mit dem Internet verbunden ist) mit einem entfernten Server 130 verbinden. Auch ist es denkbar, dass das Smartphone im Zusammenhang mit der Verarbeitung der Temperaturdaten Datenpakete mit demselben oder einem anderen Server austauscht. Dabei ist es bevorzugt, dass die Verarbeitung der Temperaturdaten ausschliesslich lokal im Smartphone 110 erfolgt und ein Datenaustausch mit dem Server nur zur Aktualisierung der App und/oder zur gelegentlichen Erfassung von Nutzungsdaten stattfindet. Es ist aber auch denkbar, dass die Verarbeitung der Temperaturdaten im wesentlichen im Server 130 erfolgt (im Sinne eines "Cloud Computing") und die App insofern lediglich dafür sorgt, dass die Temperaturdaten in geeigneter Form an den Server 130 übermittelt werden und die Ergebnisse der Analyse der Temperaturdaten in geeigneter Form vom Smartphone an den Benutzer ausgegeben werden.

### Temperaturerfassungsmodul

In der Figur 2 ist ein bevorzugtes Ausführungsbeispiel eines Temperaturerfassungsmoduls in einer perspektivischen Explosionsansicht illustriert. Das Temperaturerfassungsmodul umfasst ein Unterteil 201 aus einem Duroplast wie Bakelit™. Das Unterteil 201 begrenzt einen Hohlraum, welcher von einem deckelartigen Oberteil 206 aus demselben Material wie das Unterteil 201 verschlossen ist.

In dem Hohlraum ist ein Temperatursensor 203 angeordnet (konkret ein NTC-Temperatursensor), welcher durch eine Öffnung im Boden des Unterteils und durch eine darunter liegende Öffnung im Deckel des Schnellkochtopfs hindurch ins Innere der Schnellkochtopf ragt. Dabei ist der Temperatursensor 203 flexibel in einer auf der Innenseite des Bodens des Unterteils 201 angeordneten Dichtung 204 gehalten, welche das Eindringen von Wasserdampf und flüssigem Wasser aus dem Schnellkochtopf in den Hohlraum verhindert. Durch die Lagerung des Temperatursensors im flexiblen Material der Dichtung 204 kann der Sensor bei der Einwirkung von Radialkräften ein wenig ausweichen. Dadurch werden Schläge in radialer Richtung gedämpft.

Des weiteren ist im Hohlraum ein Elektronikmodul 202 angeordnet, welches eine Ausleseeinrichtung aufweist, um den Temperatursensor 203 auszulesen und die Temperaturdaten zu digitalisieren, und welches eine Funkschnittstelle aufweist, um die digitalisierten Temperaturdaten drahtlos an einen Empfänger wie das schon erwähnte Smartphone zu übermitteln. Das Unterteil 201 das Oberteil 206 sind gegeneinander gedichtet und über drei Schrauben 205 miteinander verschraubt.

Zur Datenübertragung kommt bevorzugt das Bluetooth-Protokoll und insbesondere das Protokoll "Bluetooth 4.0 Low Energy" oder ein Nachfolgeprotokoll zum Einsatz. Über einen im Oberteil 206 angeordneten Druckknopf 207 kann das Modul 202 veranlasst werden, eine Bluetooth-Datenverbindung zum Smartphone aufzubauen. Beim erstmaligen Aufbau der Verbindung kann im Smartphone ein Name für das Temperaturerfassungsmodul vergeben werden, und die App kann so konfiguriert werden, dass sich zukünftig das Smartphone nach dem Start der App automatisch mit dem Temperaturerfassungsmodul verbindet, sobald der Benutzer den Druckknopf 207 betätigt.

### Überwachungsvorrichtung

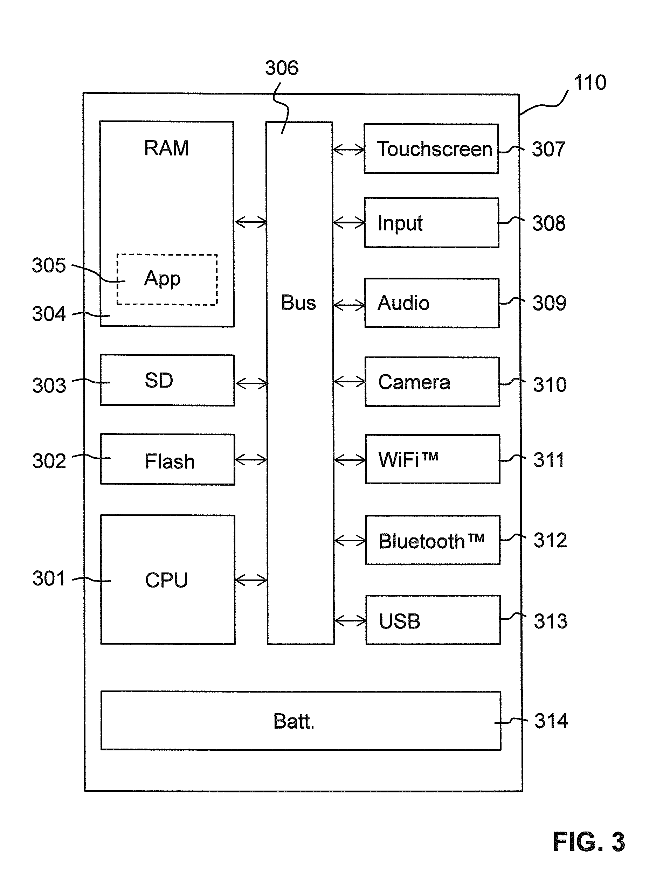

In der Figur 3 ist in stark schematischer Weise ein beispielhaftes Blockschaltbild eines Smartphones dargestellt. Das Smartphone weist mindestens einen Prozessor (CPU) 301 auf, der über einen Bus 306 mit verschiedenen Komponenten kommuniziert. Hierunter befinden sich Speicherkomponenten, darunter ein fest verbauter nichtflüchtiger Speicher 302 (zum Beispiel Flashspeicher), optional ein austauschbarer nichtflüchtiger Speicher 303 (zum Beispiel in Form einer Speicherkarte wie einer SD-Karte), und ein Arbeitsspeicher 304 (RAM), in welchen insbesondere auch ausführbare Komponenten der App 305 geladen sind. Ausserdem sind mit dem Bus beispielsweise verbunden: ein Touchscreen-Display 307, Inputelemente 308 (zum Beispiel Tasten zum Ein-/Ausschalten, für die Lautstärke usw.), Audiokomponenten 309 mit Mikrofon und Lautsprecher, eine Kamera 310, drahtlose Kommunikationsmodule wie ein Wi-Fi-Modul 311 und ein Bluetooth-Modul 312 sowie eine Schnittstelle für den drahtgebundenen Datenaustausch wie zum Beispiel ein USB-Port 313. Das Smartphone wird von einer Batterie 314 mit Strom versorgt. Selbstverständlich können noch eine Vielzahl weiterer Komponenten enthalten sein, darunter insbesondere auch Komponenten zur Verbindung mit einem drahtlosen Telefonie-Netzwerk und mit einem mobilen Datennetzwerk (zum Beispiel nach einem 2G/3G/4G-Standard).

### Ablauf eines Garvorgangs

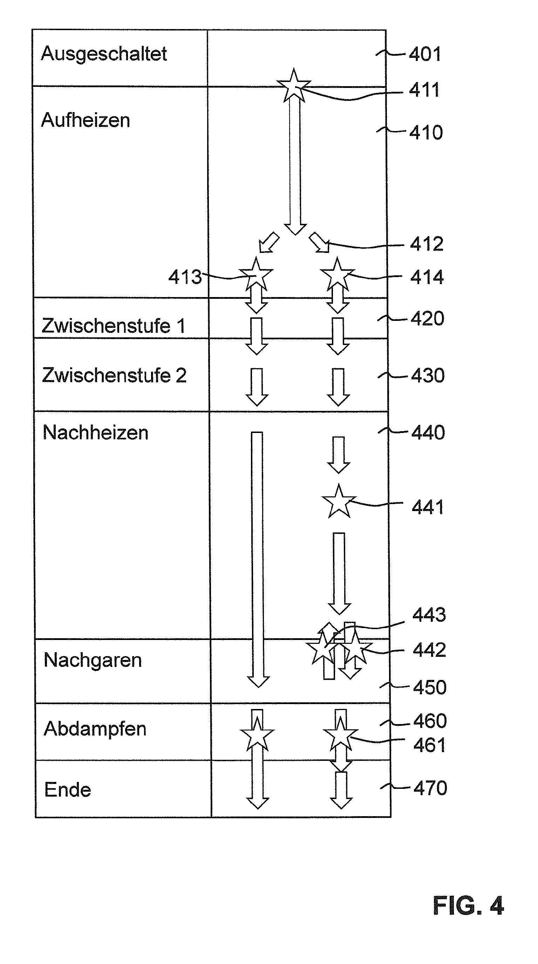

In der Figur 4 ist in stark schematischer Weise ein Ablaufplan eines Garvorgangs mit einem Schnellkochtopf unter Überwachung durch ein Smartphone illustriert. Statt eines Smartphones kann ein anderes mobiles elektronisches Gerät wie eine Smartwatch, ein Tabletcomputer usw. zum Einsatz kommen. Vor Beginn des Garvorgangs (Ausgangszustand 401, Herd ausgeschaltet) startet der Benutzer die App auf dem Smartphone und stellt sicher, dass das Smartphone via Bluetooth-Verbindung mit dem Temperaturerfassungsmodul am Schnellkochtopf gekoppelt ist. Bei der ersten Benutzung stellt der Benutzer den Herdtyp (Induktion, Gas, Glaskeramik mit Strahlungsheizkörper oder Gussherd) ein. Zudem kann er weitere Parameter wie Höhe über Meer, Zahl der Leistungsstufen des Herds, verwendetes Kochgeschirr, verwendete Einsätze usw. vorgeben. Der Benutzer wählt dann in der App das zuzubereitende Gargut an. Die App schlägt für dieses Gargut unter anderem eine bestimmte Zieltemperatur und Garzeit sowie die Abdampfgeschwindigkeit und die Gargutkonsistenz vor. Der Benutzer kann diese Parameter bei Bedarf verändern. Alternativ gibt der Benutzer diese Parameter direkt selbst ein. Optional können weitere Parameter eingegeben werden, z.B. ob es sich um ein grobstückiges, feinstückiges oder flüssiges Gargut handelt, ob es sich um ein anbrenngefährdetes Gargut handelt, usw.

Der Benutzer wird dann in einem Schritt 411 aufgefordert, den Ablauf des Garprogramms in der App zu starten und gleichzeitig die Heizquelle (d.h. den Herd) auf eine von der App vorgegebene Heizstufe einzuschalten. Damit startet ein Aufheizvorgang 410. Das Temperaturerfassungsmodul misst laufend die Temperatur im Schnellkochtopf und übermittelt diese in regelmässigen Zeitabständen an die im Smartphone laufende App. Die App überwacht den Temperaturverlauf und ermittelt daraus und aus den eingegebenen Parametern einen optimalen Rückschaltzeitpunkt für die Heizquelle. Dieser wird so berechnet, dass die Temperatur die Zieltemperatur um maximal ca. 5 °C überschiesst und sich anschliessend in einem Toleranzband von ca. +/- 5 °C um die Zieltemperatur bewegt. Während des gesamten Aufheizvorgangs 410 überwacht die App, ob ein Fehlerzustand vorliegt, wie dies nachstehend noch näher beschrieben wird. Am berechneten Rückschaltzeitpunkt fordert die App den Benutzer auf, entweder die Heizung ganz auszuschalten (Aufforderung 413) oder die Heizleistung zu reduzieren (Aufforderung 414). Welche dieser beiden Aufforderungen ergeht, hängt unter anderem von der Art und der Menge des Garguts ab (Verzweigung 412). Wenn erwartet wird, dass die Restwärme ohne weitere Wärmezufuhr ausreicht, um das gewünschte Garergebnis zu erreichen, wird der Benutzer aufgefordert, die Heizung ganz auszuschalten; andernfalls wird er aufgefordert, die Heizleistung zu reduzieren.

Es folgen eine erste Zwischenstufe 420, in der bestimmte Werte, die später benötigt werden, abgespeichert werden, und eine zweite Zwischenstufe 430, in der die App abwartet, bis der Temperaturanstieg abzuflachen beginnt. Dazu wird von der App laufend ein Temperaturgradient berechnet, und es wird überwacht, ob der Temperaturgradient sinkt (d.h. ob die zweite Ableitung der Temperatur nach der Zeit negativ wird). Falls dies nach einer Zeitdauer, die vom Herdtyp, vom Garguttyp und von der Gargutmenge abhängig ist, nicht der Fall ist, gibt die App eine Warnung an den Benutzer aus.

Falls der Benutzer bei der Verzweigung 412 aufgefordert wurde, die Heizleistung zu reduzieren, aber die Heizung noch nicht ganz auszuschalten, folgt nun eine Phase des Nachheizens (Phase 440). In diesem Zustand wird laufend die Temperatur überwacht, um beispielsweise eine Übertemperatur zu detektieren (in diesem Fall wird der Benutzer aufgefordert, die Heizung ganz auszuschalten), um eine zu geringe Heizleistung zu detektieren (in diesem Fall wird der Benutzer aufgefordert, die Heizleistung zu erhöhen, Aufforderung 441), um einen zu schnellen Temperaturanstieg festzustellen (in diesem Fall wird der Benutzer aufgefordert, die Heizleistung zu reduzieren), und um festzustellen, ab wann die verbleibende Wärmemenge genügt, um das gewünschte Garergebnis auch ohne weitere Wärmezufuhr zu erreichen (in diesem Fall wird der Benutzer aufgefordert, die Heizung ganz auszuschalten, Aufforderung 442). Zusätzlich kann eine Überwachung auf weitere Fehlerzustände erfolgen.

Sobald die Heizung ganz ausgeschaltet wurde, folgt eine Phase des Nachgarens (Phase 450). Die Restwärme des Herds, des Garguts und des Kochgeschirrs führt in dieser Phase zu einer Fortsetzung des Garvorgangs, auch ohne dass Wärme zugeführt wird. Auch in dieser Phase wird die Temperatur laufend überwacht. Falls die die Temperatur zu schnell sinkt, um den Garprozess zum gewünschten Ergebnis zu bringen, wird der Benutzer aufgefordert, die Heizung nochmals einzuschalten (Aufforderung 443), wodurch der Garvorgang wieder in eine Nachheizphase 440 zurückgelangt. Falls die Temperatur nicht oder zu langsam sinkt, zeigt dies an, dass der Herd nicht ausgeschaltet wurde, und der Benutzer wird nochmals daran erinnert, den Herd auszuschalten.

Vor dem Ende des Garvorgangs erfolgt in einer Phase 460 noch das Abdampfen, d.h. die Rückkehr in einen Zustand, in dem im Inneren des Schnellkochtopfs wieder Normaldruck herrscht. Dies kann rein passiv durch Abkühlen erreicht werden, oder dies kann erreicht werden, indem ein Abdampfventil betätigt wird. Im letzteren Fall ergeht eine entsprechende Aufforderung 461 an den Benutzer. Wenn das Abdampfen beendet ist, wird der Endzustand 470 erreicht.

Während des gesamten Garvorgangs wird der Fortschritt des Garvorgangs und daraus abgeleitet die erforderliche Restgarzeit anhand der bekannten RGT-Regel (Reaktionsgeschwindigkeit-Temperatur-Regel) laufend neu berechnet. Solange z.B. die Ist-Temperatur unter der Zieltemperatur liegt, wird die Restgarzeit entsprechend verlängert. Auf diese Weise kann immer ein perfektes Garergebnis erreicht werden.

### Fehlerüberwachung

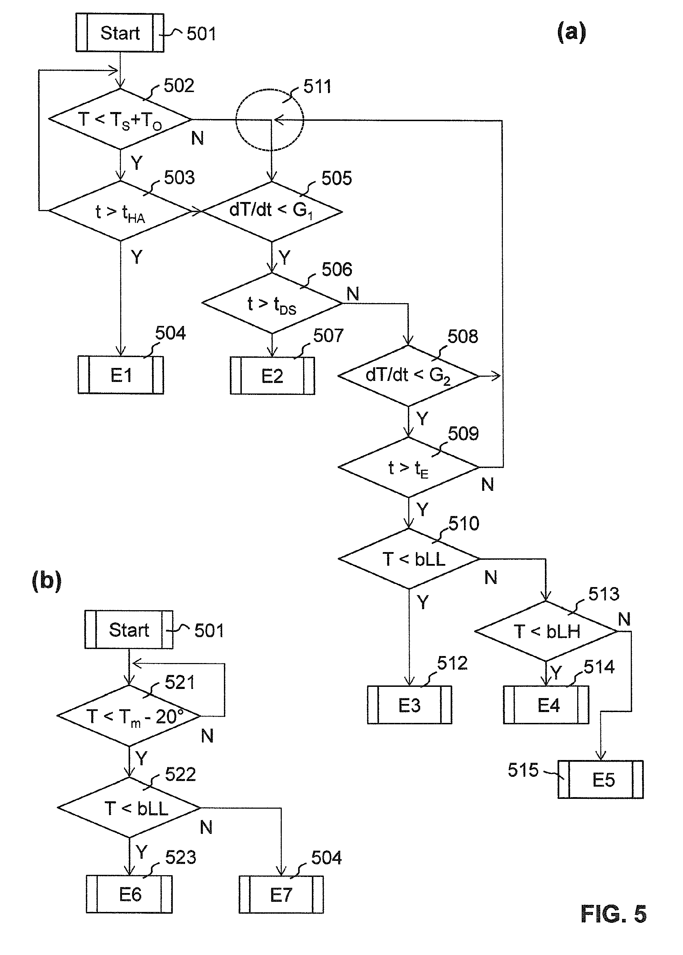

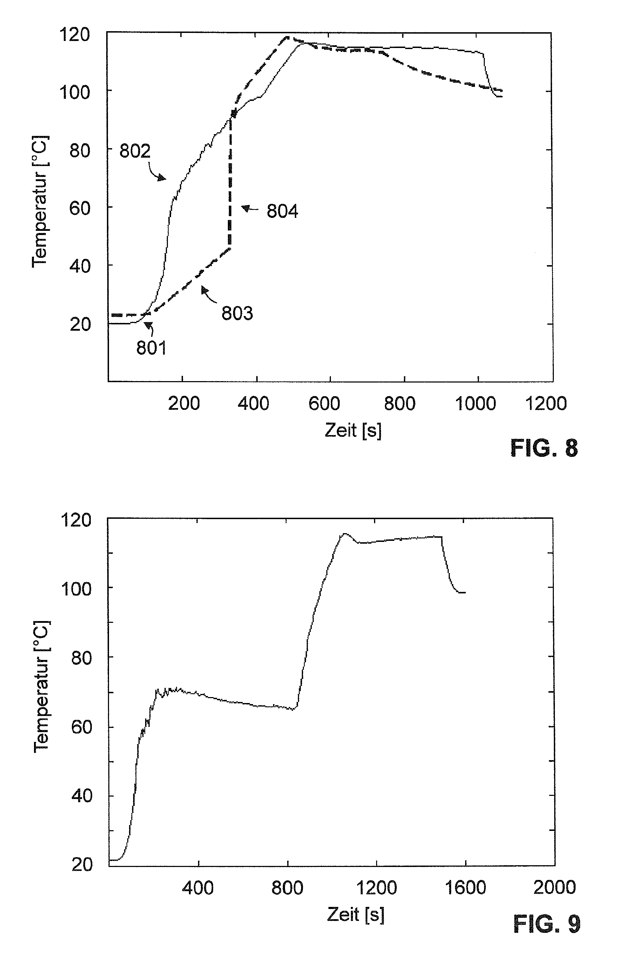

Während des gesamten Garvorgangs erfolgt laufend eine Überwachung auf Abweichungen von einem erwünschten Zustand (Fehlerzustände). Ein möglicher Grundalgorithmus für diese Überwachung ist beispielhaft in der Figur 5 illustriert. Dieser Grundalgorithmus beruht auf gewissen Basiskriterien für die Fehlerüberwachung, die durch weitere Kriterien weiter verfeinert oder abgewandelt werden können. Solche weiteren Kriterien werden anschliessend in Zusammenhang mit den Figuren 9-15 diskutiert. Der Algorithmus umfasst zwei Zweige, die als Teile (a) und (b) dargestellt sind. Der Zweig (a) kommt nur während der Aufheizphase 410 zum Einsatz. Der Zweig (b) kommt dagegen nur während der nachfolgenden Nachheizphase 440 und Nachgarphase 450 zum Einsatz.

In diesem Dokument ist bei allen absoluten Temperaturangaben ist zu berücksichtigen, dass sich diese auf eine Höhe von Normalnull (0 m.ü.M.) beziehen. Bei grösseren Höhenlagen sind die angegebenen Temperaturwerte entsprechend der barometrischen Verhältnisse zu reduzieren (statt 100 °C ist annähernd die Siedetemperatur von Wasser gemäss der bekannten barometrischen Höhenformel einzusetzen; statt 90 °C können 90% der Siedetemperatur eingesetzt werden, statt 95 °C entsprechend 95% der Siedetemperatur, usw.).

Entsprechend werden im Folgenden Temperaturwerte boilLimitLow und boilLimitHigh verwendet. Dabei handelt es sich um die Grenzen des Temperaturintervalls, innerhalb dessen die Siedetemperatur - und damit auch die Ventilschliessung - erwartet werden. Bei einer Höhe von 0 m.ü.M. können diese Werte z.B. 95 °C und 105 °C betragen. Bei grösseren Höhenlagen reduzieren sich diese Werte entsprechend der bekannten barometrischen Höhenformel. Die Berechnung der reduzierten Werte kann anhand der zuvor vom Benutzer in der App eingegebenen Höhenlage erfolgen.

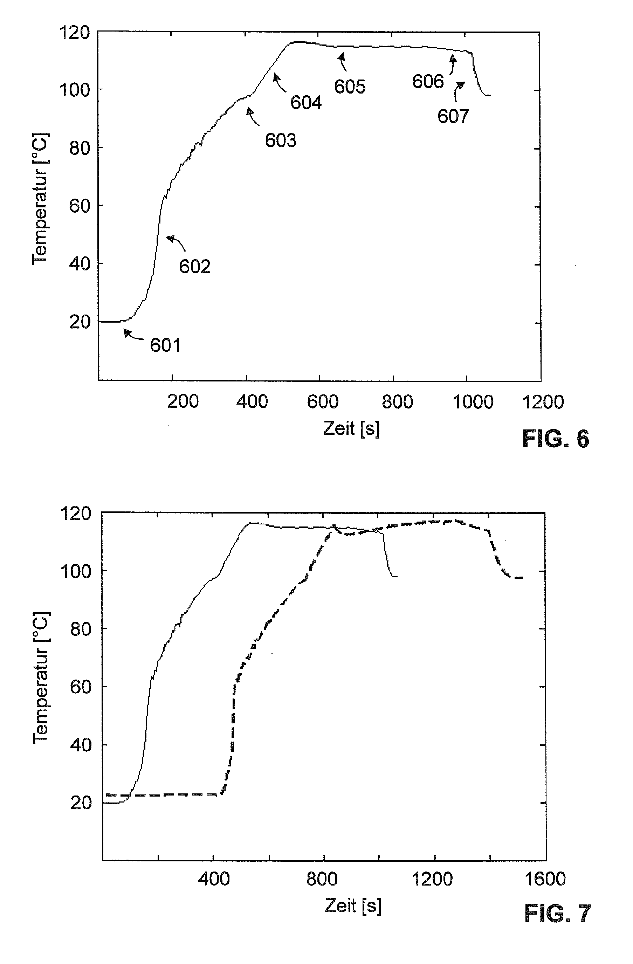

Im Zweig (a) wird nach dem Start 501 zunächst überwacht, ob die gemessene Temperatur T kleiner ist als die Starttemperatur T_{S} plus ein Offset T_{O} (Verzweigung 502). Falls dies der Fall ist, wird geprüft, ob die abgelaufene Zeit t einen Wert t_{HA} überschritten hat (Verzweigung 503). Falls auch dies der Fall ist, zeigt dies an, dass die Temperatur über den Zeitraum t_{HA} hinweg nicht signifikant angestiegen ist. Daraus wird geschlossen, dass die Heizquelle nicht richtig eingeschaltet wurde, und es wird eine entsprechende Fehlermeldung E1 ausgegeben (Box 504). Zusätzlich kann hier kumulativ geprüft werden, ob auch der Temperaturgradient unter einem Anfangsschwellwert liegt, wie dies nachstehend im Zusammenhang mit der Figur 7 noch näher erläutert wird.

Sobald die Temperatur den Wert T_{S} + T_{O} überschritten hat, wird laufend der Temperaturgradient dT/dt überwacht. Solange der Temperaturgradient über einem Schwellwert G₁ liegt (Verzweigung 505), ist alles in Ordnung (Normalzustand 511). Andernfalls wird geprüft, ob dieser Zustand für eine Zeit t vorliegt, die einen Wert t_{DS} überschreitet (Verzweigung 506). Falls dies der Fall ist, liegt ein langandauerndes, sehr langsames Ansteigen der Temperatur vor. Daraus wird geschlossen, dass ein Trockenstart, Überladung mit zu viel Gargut oder zu geringe Heizleistung vorliegt, und es wird eine entsprechende Fehlermeldung E2 ausgegeben (Box 507). Um einen Trockenstart von den anderen möglichen Fehlerquellen zu unterscheiden, kann zusätzlich der Temperaturverlauf auf Linearität geprüft werden, wie dies nachstehend im Zusammenhang mit der Figur 8 noch näher erläutert wird.

Falls andererseits der reduzierte Temperaturgradient noch nicht während einer Zeit t > t_{DS} vorliegt, wird als nächstes geprüft, ob der Temperaturgradient kleiner ist als ein Schwellwert G₂, der niedriger ist als der Schwellwert G₁ (Verzweigung 508). Falls dies nicht der Fall ist, ist alles in Ordnung. Andernfalls liegt eine starke Temperaturstagnation vor. Um die Ursache dieser Temperaturstagnation weiter einzugrenzen, wird als nächstes geprüft, ob die Zeit, während der die Stagnation vorliegt, einen Wert t_{E} überschritten hat (Verzweigung 509). Falls dies nicht der Fall ist, ist (noch) alles in Ordnung. Andernfalls wird auf einen Fehlerzustand geschlossen. Dieser wird wie folgt weiter eingegrenzt: Falls die Temperatur unterhalb von boilLimitLow liegt (Verzweigung 510; hier wird die Temperatur boilLimitLow als bLL bezeichnet), wird geschlossen, dass ein Trockenlauf, Anbrennen oder ein Ausfall der Heizquelle vorliegt, und es wird eine entsprechende Fehlermeldung E3 ausgegeben (Box 512). Falls andererseits die Temperatur zwar über boilLimitLow, aber unter boilLimitHigh liegt (Verzweigung 513, hier wird die Temperatur boilLimitHigh als blH bezeichnet), kann einer der vorstehenden Fehlerzustände Trockenlauf, Anbrennen oder Ausfall der Heizquelle vorliegen, es kann aber auch ein Problem bei der Ventilschliessung vorliegen, und es wird eine entsprechende Fehlermeldung E4 ausgegeben (Box 514). Falls die Temperatur aber oberhalb von boilLimitHigh liegt, kann stattdessen auch eine Undichtigkeit nach der Ventilschliessung vorliegen, und es wird eine entsprechende Fehlermeldung E4 ausgegeben (Box 515). Im Folgenden wird im Zusammenhang mit den Figuren 9-12 noch näher erläutert, wie weiter zwischen diesen Fehlerzuständen unterschieden werden kann.

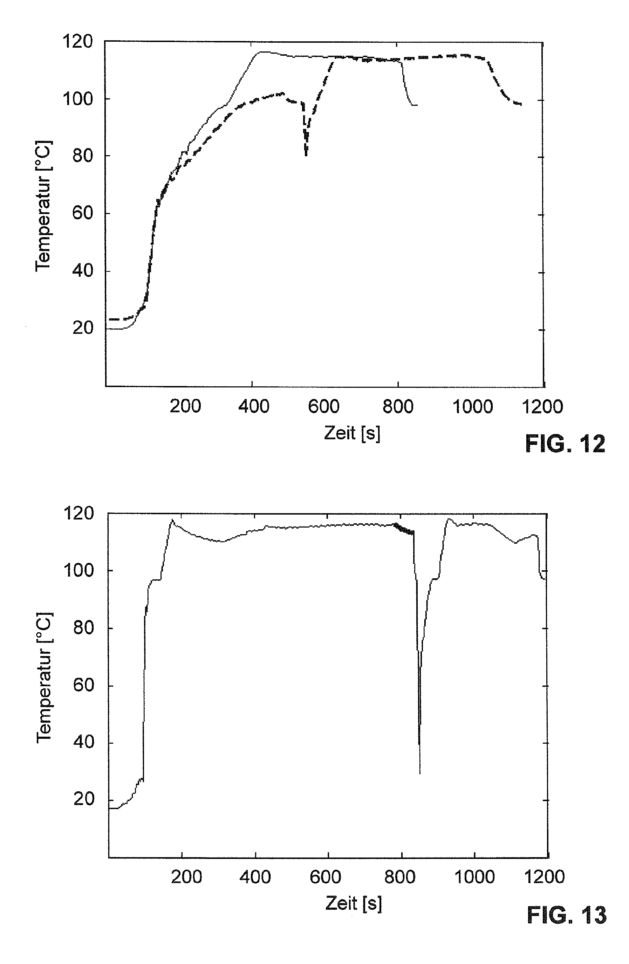

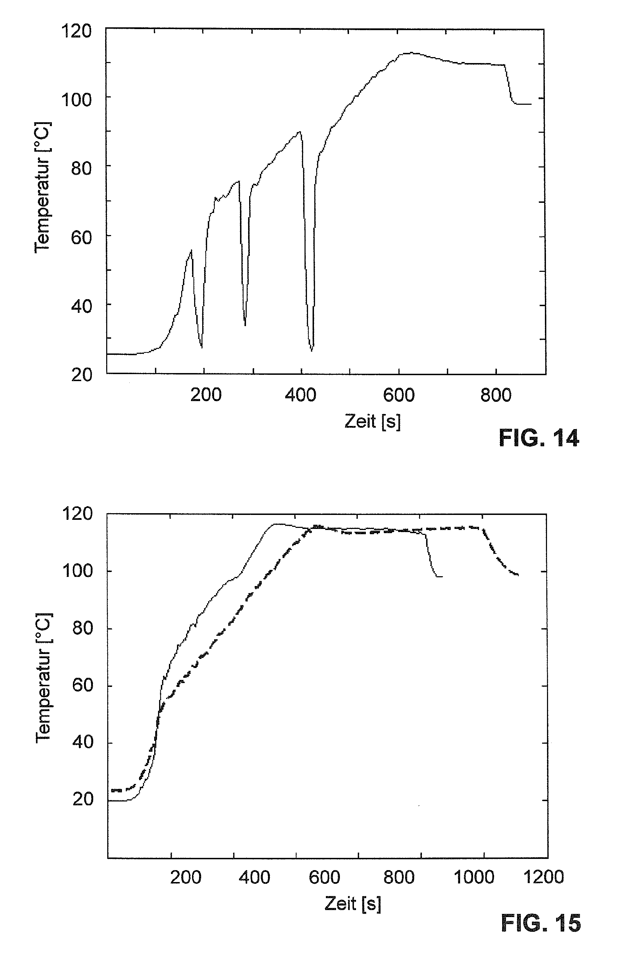

Im Zweig (b) wird untersucht, ob während des Nachheizens oder Nachgarens die Temperatur um mehr als 20 °C unter der Maximaltemperatur liegt (Verzweigung 521). Falls die Temperatur sogar unterhalb von boilLimitLow liegt (Verzweigung 522, hier wird die Temperatur boilLimitLow als bLL bezeichnet), wird geschlossen, dass der Deckel geöffnet wurde, und es wird eine entsprechende Fehlermeldung E6 ausgegeben (Box 523). Andernfalls wird geschlossen, dass ein vorzeitiges Abdampfen eingeleitet wurde, und es wird eine entsprechende Fehlermeldung E7 ausgegeben (Box 524). Weiterbildungen werden im Zusammenhang mit den Figuren 13 und 14 noch näher erläutert.

Die Ausgabe der Fehlermeldungen kann visuell über das Display des Smartphones und/oder akustisch über den Lautsprecher erfolgen. Die Fehlermeldungen können mit Handlungsanweisungen an den Benutzer verbunden sein, z.B. "bitte prüfen, ob Herd eingeschaltet ist", "bitte Heizleistung reduzieren", "bitte prüfen, ob genügend Wasser eingefüllt ist", "bitte Ventil prüfen" usw. Die App kann bei Fehlerzuständen eine Bestätigung des Benutzers anfordern, bevor sie wieder zur Überwachung zurückkehrt. Sie kann bei Ausbleiben einer Bestätigung das Smartphone veranlassen, geeignete Warnsignale abzugeben.

Einige Fehlerzustände werden mit Hilfe einer Überwachung des Temperaturgradienten ermittelt. Der Temperaturgradient ist die erste Ableitung der Temperatur nach der Zeit. Die Temperatur wird digital zu diskreten Zeitpunkten (Samplingpunkten) gemessen. Der Gradient kann dann z.B. in üblicher Weise annähernd berechnet werden, indem die Temperaturdifferenz zwischen zwei aufeinanderfolgenden Samplingpunkten ermittelt wird und durch die Zeitdifferenz zwischen diesen Samplingpunkten geteilt wird. Aus dem Stand der Technik sind weitere Verfahren zur fortlaufenden Berechnung des Gradienten bekannt. Ebenso sind aus dem Stand der Technik Verfahren zur zeitdiskreten annähernden Berechnung der zweiten Ableitung der Temperatur nach der Zeit bekannt.

### Einzelne Fehlerquellen

Nachfolgend sollen verschiedene Fehlerquellen näher betrachtet werden, und es sollen Abwandlungen und Weiterbildungen des oben dargestellten Grundalgorithmus zur besseren Erkennung der entsprechenden Fehlerzustände diskutiert werden.

Dazu ist zunächst in der Figur 6 ein typischer gemessener Temperaturverlauf während eines Garvorgangs auf einem Glaskeramikkochfeld bei einer Höhenlage von 0 m.ü.M. illustriert. Nach dem Einschalten der Heizung steigen die am Deckel gemessene Temperatur und der daraus abgeleitete Temperaturgradient zeitverzögert an, da sich zunächst nur der Topfboden und das Wasser am Topfboden erwärmen, während die darüber liegende Luft noch kalt bleibt (Bereich 601). Nachdem das Wasser am Topfboden zu sieden beginnt, gelangen heisse Luft und Wasserdampf zum Deckel, und die Temperatur steigt zunächst steil an, bevor der Temperaturgradient spürbar abflacht (Bereich 602). Sobald die Temperatur nahe an 100 °C gelangt, flacht der Temperaturgradient kurz weiter ab, während die restliche Luft durch Wasserdampf aus dem Kochtopf verdrängt wird (Bereich 603). Nachdem dies der Fall ist, schliesst das Ventil, und die Temperatur steigt nun wieder steiler an(Bereich 604). Kurz vor Erreichen der Zieltemperatur wird die Heizleistung reduziert. Nun erreicht die Temperatur ihr Maximum, sinkt dann leicht ab und verharrt im Bereich der Zieltemperatur (Bereich 605; hier bei ca. 115 °C, leicht pulsierend mit sinkender Tendenz), bis die Heizquelle ganz ausgeschaltet wird. Daran anschliessend sinkt die Temperatur etwas schneller ab (Bereich 606). Sobald der Benutzer mit dem Abdampfen beginnt, sinkt die Temperatur schnell auf unter 100 °C ab (Bereich 607).

Für andere Herdtypen verlaufen die Temperaturen typischerweise etwas anders, jedoch lässt sich für jeden Herdtyp ein typischer Temperaturverlauf feststellen. Fehlerzustände werden im Allgemeinen durch bestimmte Abweichungen von einem solchen idealtypischen Temperaturverlauf detektiert. Dies wird nun im Folgenden für verschiedene Fehlerzustände erläutert.

### Herd nicht eingeschaltet

In der Fig. 7 ist neben einem normalen Temperaturverlauf (durchgezogene Linie) ein Temperaturverlauf dargestellt, der auftritt, wenn die Heizung verzögert eingeschaltet wurde (gestrichelte Linie). Wie schon vorstehend erläutert, kann dies einfach dadurch erkannt werden, dass die Temperatur innerhalb eines vorgegebenen Zeitraums gar nicht oder um weniger als einen Offset T_{O} ansteigt. Zusätzlich kann überwacht werden, ob der Temperaturgradient kleiner ist als ein Schwellwert GRAD_MISF_NO_GROWTH ist.

### Trockenstart

In der Fig. 8 ist neben einem normalen Temperaturverlauf (durchgezogene Linie) ein Temperaturverlauf dargestellt, der auftritt, wenn ein Trockenstart vorliegt, d.h. wenn Speisen ohne Zugabe von genügend Flüssigkeit in den Schnellkochtopf eingefüllt wurden (gestrichelte Linie). Beim normalen Temperaturverlauf erwärmen sich zuerst der Topfboden und kurz darauf das darauf liegende Wasser, während die Luft im Topf nur geringfügig wärmer wird. Sobald das Wasser auf dem Topfboden zu sieden beginnt (Zeitpunkt 801), steigt die Temperatur am Deckel sehr schnell an. Dieser schnelle Anstieg dauert nur kurz an, bevor er nach einem Knick in der Temperaturkurve wieder etwas abflacht (Bereich 802). Mögliche Ursachen dieser Abflachung können die durch Dampf verbesserte Wärmeaufnahme des Gargutes sowie zurücktropfendes, kaltes Kondenswasser, welches das Wasser auf dem Topfboden abkühlt, umfassen. Bei einem Trockenstart steigt die Temperatur am Deckel dagegen sehr linear und mit geringerem Gradienten (Bereich 803). Wie schon vorstehend erläutert wurde, kann schon allein dies zur Erkennung des Trockenstarts dienen. Erst wenn nachträglich Wasser hinzugefügt wird, wird die im überhitzten Topfboden gespeicherte Energie endlich abgegeben, und die Temperatur steigt sprunghaft an (Bereich 804).

Um einen Trockenstart noch besser zu erkennen, kann der Temperaturverlauf zusätzlich auf Linearität geprüft werden. Wenn die Temperatur zu steigen beginnt, wird erwartet, dass innerhalb einer bestimmten Zeit (bzw. innerhalb einer bestimmten Zahl von Reglerzyklen MISF_DRY_START_ACCEPTANCE) ein Knick in der Temperaturkurve auftritt, welcher das Vorhandensein von Wasser bestätigt. Ist dies nicht der Fall, wird auf einen Trockenstart geschlossen.

Die Erkennung der Nichtlinearität lässt sich am einfachsten aus der zweiten Ableitung der Temperaturwerte bestimmen, respektive aus deren Abweichung zum linearen Least-Square-Modell (also aus deren Varianz). Bleibt die Varianz unter einem Schwellwert VAR_THRESHOLD_DRY_START, so ist kein Knick in der Temperaturkurve erfolgt.

Die Erkennung des Fehlers wird beschleunigt, wenn überwacht wird, ob die zweite Temperaturableitung positiv aber sehr klein ist, also der Temperaturgradient nur ganz allmählich langsam ansteigt.

Wenn sich auf dem Topfboden sehr viel Flüssigkeit befindet, so dauert es sehr lange, bis diese zu sieden beginnt. In diesem Fall würde ebenfalls ein Trockenstart erkannt, obwohl Wasser im Überfluss vorhanden ist. Deshalb kann für Speisen des Typs "flüssig" die Erkennung des Trockenstarts deaktiviert werden.

### Temperaturstagnation während Aufheizphase

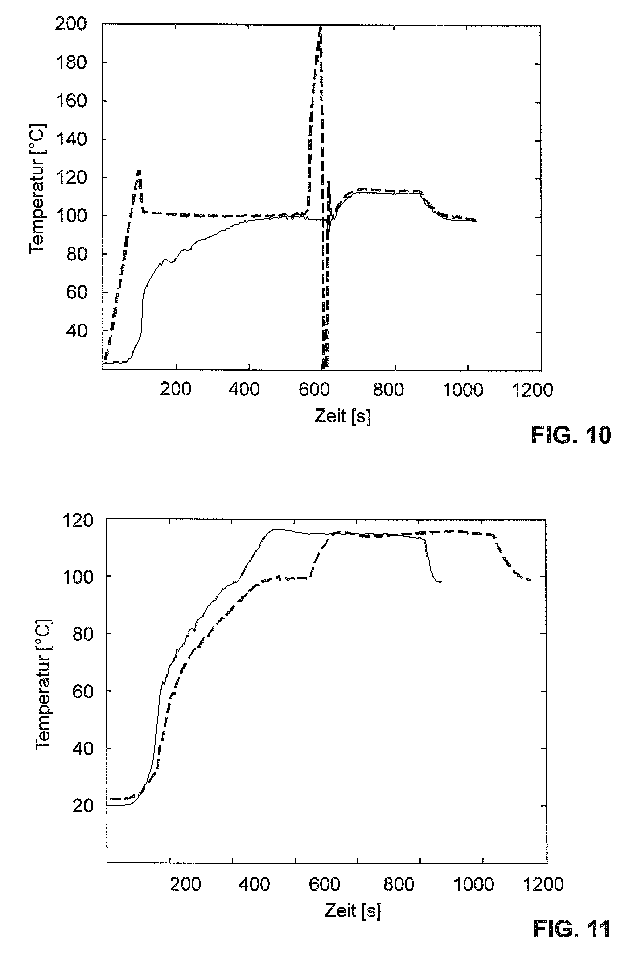

In den Figuren 9-12 sind Temperaturverläufe dargestellt, die auftreten, wenn zwischenzeitlich ein Problem auftritt, das zu einer Temperaturstagnation führt. Wenn die Temperatur nicht weiter steigt, können folgende Ursachen dafür verantwortlich sein:
- Herd ist ausgeschaltet (Fig. 9). Die Temperatur sinkt vorzeitig wieder ab.
- Trockenlauf (Fig. 10). Bei Speisen, welche gedämpft werden, wird das Gargut auf den Siebeinsatz gelegt, darunter befindet sich Wasser. Wenn diese Wassermenge zu klein ist, kann nicht mehr gleich viel Wärme vom Topfboden in den Innenraum abgeführt werden. Als Folge davon wird der Temperaturgradient kleiner oder sogar negativ (je nachdem wie viel Wärme vom Gargut aufgenommen wird). In der Fig. 10 ist dies mit durchgezogener Linie dargestellt. Ausserdem ist mit gestrichelter Linie der (normalerweise nicht zur Überwachung verwendete) Temperaturverlauf am Topfboden dargestellt.
- Anbrennen: Speisen, die ohne Dampfsieb gekocht werden, insbesondere breiig kochende Speisen, können am Topfboden anbrennen. Zuerst entwickelt sich am Boden eine festsitzende Schicht. Da diese nicht mehr durch Konvektion ausgetauscht wird, beginnt sie sich übermässig zu erhitzen und verbrennen. Angebrannte Speisen isolieren ziemlich gut, da der Wasseranteil abnimmt. Durch die angebrannte Schicht gelangt nicht mehr genügend Wärme in den Topf. Dadurch überhitzt der Topfboden, was wiederum zu einer noch stärkeren Verbrennung der Speisen führt. Anbrennen äussert sich im Temperaturverlauf ähnlich wie Trockenlauf (Fig. 10).
- Ventil schliesst nicht (Fig. 11, gestrichelte Linie): Falls das Ventil nicht schliesst, kann sich im Schnellkochtopf kein Überdruck aufbauen, weshalb die Temperatur nicht über den Siedepunkt hinauskommt. Nebst dem Ventil selbst können auch Undichtigkeiten im Verriegelungsmechanismus verantwortlich für die Temperaturstagnation sein.
- Undichtigkeit nach Ventilschliessung (Fig. 12, gestrichelte Linie): Falls eine Undichtigkeit (meist an der Gummidichtung) vorliegt, kann die Temperatur so lange ansteigen, bis die Verlustleistung des entweichenden Dampfes in einem Gleichgewicht mit der zugeführten Heizleistung steht.

Zusammenfassend kann gesagt werden, dass die Temperatur im Topf nicht mehr steigt oder gar sinkt, wenn die Wärmezufuhr gestoppt wird, die Wärmeübertragung erschwert wird, oder wenn durch plötzliche Verluste mehr Wärme entweicht, als hinzugeführt wird. Zum Teil sind dabei spezifische Merkmale erkennbar, welche für den einen oder anderen Fehler sprechen. Es seien die wichtigsten Eigenschaften aufgezählt:
- Heizung ausgeschaltet (Fig. 9): Die Temperatur steigt kurze Zeit noch weiter an und fällt danach ab. Dieser Übergang erfolgt umso sanfter je tiefer die Temperatur des Dampfes ist.
- Trockenlauf (Fig. 10): Die Temperatur am Deckel stagniert, während jene am Topfboden zuerst konstant bleibt, um dann bei vollständiger Austrocknung in die Höhe zu schiessen. Nach dem Ablöschen mit frischem Wasser kann der Topfboden so viel Energie freigeben, dass auch am Deckel Temperaturen grösser als 120°C erreicht werden können. Ein Trockenlauf lässt sich erkennen, schon bevor der Topfboden vollständig trocken liegt.
- Anbrennen: Auch in diesem Fall stagniert die Temperatur am Deckel und jene am Topfboden steigt steil an. Hier ist Abhilfe nur möglich, wenn der Fehler rechtzeitig erkannt und behoben wird. Ist die Speise erst mal richtig am Boden angebrannt, lässt sie sich nicht mehr leicht davon lösen.
- Probleme bei der Ventilschliessung (Fig. 11): Die Temperatur bleibt am Siedepunkt hängen. Kleine Schwankungen sind nicht auszuschliessen, ansonsten ist ein asymptotisch horizontaler Temperaturverlauf zu erwarten.
- Undichtigkeit nach Ventilschliessung (Fig. 12): Mit zunehmender Temperatur steigt der Druck und deshalb auch die Leckage. Dadurch nimmt die Temperatur immer weniger zu, bis ein Gleichgewicht erreicht ist. Wichtiges Merkmal ist, dass der Gradient kleiner ist als jener vor der Ventilschliessung und abnehmende Tendenz aufweist.

Diese Fehlerzustände können wie folgt erkannt werden: Nachdem die Temperatur um mindestens einen bestimmten Schwellwert TEMP_MISC_DETECT-THRESHOLD über die Starttemperatur gestiegen ist, wird der Gradient auf mögliche Stagnation überprüft. Es wird kontrolliert, ob der Gradient kleiner als ein erster Schwellwert GRAD_MISF_NO GROWTH ist, oder ob der Gradient kleiner als ein zweiter, grösserer Schwellwert GRAD_MISF_NOISY ist, während gleichzeitig die Temperatur grosse Schwankungen aufweist (insbesondere, deren Varianz gegenüber der Linearisierung grösser als ein Schwankungsschwellwert VAR_MISF_NOISY ist). Oberhalb der Ventilschliessungstemperatur wird noch eine dritte Bedingung wirksam, nämlich ob der Gradient kleiner als ein zuvor ermittelter Durchschnittswert mainRampGrad des Gradienten geteilt durch einen Wert RATIO_GRAD_DRY_STITCHING ist. Dadurch lässt sich erkennen, wie sich der Gradient nach der Ventilschliessung im Verhältnis zu vorher verhält.

Ist eine der oben genannten Bedingungen erfüllt, wird eine Zählervariable inkrementiert und entsprechend der aktuellen Temperatur mit entsprechenden Schwellwerten verglichen:
- MISF_STAGNATION_ACCEPTANCE_LOW für Temperaturen unterhalb des Temperaturwerts boilLimitLow;
- MISF_STAGNATION_ACCEPTANCE_VALVE für Temperaturen zwischen den Temperaturwerten boilLimitLow und boilLimitHigh; und
- MISF_STAGNATION_ACCEPTANCE_HIGH oberhalb des Temperaturwerts boilLimitHigh.

Oberhalb von boilLimitLow wird noch eine zusätzliche Toleranz hinzugefügt, welche vom Wert mainRampGrad abhängig ist. Diese Toleranz dient dazu grosse Beladungen zu kompensieren, bei denen der Gradient von sich aus bereits kleiner ist.

Erreicht die Zählvariable einen Wert, der grösser als der Schwellwert ist, wird der Fehlerzustand erkannt. In Abhängigkeit davon, ob der Dampfeinsatz verwendet wird, wird unterschieden, ob ein Trockenlauf im Gange ist oder die Speisen am Anbrennen sind. Weiterhin wird im Ventilschliessungsbereich darauf hingewiesen, dass das Ventil Probleme bei der Schliessung hat. Oberhalb des Ventilschliessungsbereichs wird geschlossen, dass eine Undichtheit vorliegen könnte.

### Temperatureinbruch beim Nachheizen

In der Fig. 13 ist ein Temperaturverlauf dargestellt, bei dem während des Nachheizens ein Temperatureinbruch erfolgt ist, weil ein Trockenlauf eingetreten ist. Bei langen Garprozessen kann es sein, dass über lange Zeit kleine Mengen Dampf aus dem Ventil entweichen. Auf die Dauer kann dies zu einem Trockenlauf führen. Falls Speisen direkt auf dem Topfboden gegart werden und während des Garprozesses nicht Flüssigkeit freigeben (z.B. Fleisch), können diese auch anbrennen. Weiterhin kommen Heizungsausfall und (plötzliche) Undichtheit als mögliche Ursachen ebenfalls in Frage. Auch während des Nachheizens ist das Verdunsten von Wasser notwendig, um die Wärme der Heizplatte im Topf zu verteilen. Geht zu viel Wasser verloren (oder es wird von den enthaltenen Speisen aufgesaugt), gelangt weniger Wärme in den Topf, die Temperatur nimmt ab. Im Gegensatz zu aktivem Abdampfen durch den Benutzer ist dieses Abkühlen relativ langsam und sehr stark von der Innentemperatur der Speisen abhängig, dennoch ist es nicht aufzuhalten.

Dieser Fehlerzustand wird wie folgt erkannt: Zunächst wird ein Schwankungsmuster der Heizquelle während des Nachheizens ermittelt. Insbesondere bei Guss- und Glaskeramikplatten kann ein solches Schwankungsmuster dadurch zustandekommen, dass die Heizquelle periodisch ein- und ausgeschaltet wird. Wenn die Eigenschaften der Heizquelle erkannt wurden, ist bekannt, in welchem Rahmen bei gegebener Heizstufe die Temperatur schwanken kann, sowohl bei thermostat- wie auch bei kontinuierlich geregelter Heizung. Fällt die Temperatur weit aus diesem Muster heraus, kann davon ausgegangen werden, dass ein unerwartetes Ereignis eingetroffen ist. Je nachdem ob eine kontinuierliche oder gepulste Heizung detektiert wurde, muss die Temperatur um einen bestimmten Betrag COEFF_TEMP_FALL_CONTINUOUS oder COEFF_TEMP_FALL_PULSED, multipliziert mit der Wellenhöhe waveHeight des Schwankungsmusters, unter dem letzten Peakwert des Schwankungsmusters liegen, um den Fehler festzustellen.

### Fehlbedienungen: Deckelöffnung, vorzeitiges Abdampfen

In der Fig. 14 ist ein Temperaturverlauf illustriert, der eintritt, wenn der Deckel des Schnellkochtopfs während des Aufheizens mehrmals geöffnet wurde.

Diese Störung ist benutzerverursacht. Solange der Dampfkochtopf nicht unter Druck steht, kann er ohne weiteres geöffnet werden, was zu einem sehr schnellen Temperaturabfall führt. Steht er erstmals unter Druck, muss zuerst abgedampft werden, was je nach Gargut relativ langsam stattfindet. Wenn der Deckel geöffnet wird, sollten sämtliche Variablen, die im Zusammenhang mit der Ventilschliessung stehen, zurückgestellt werden.

Diese Fehlbedienung wird wie folgt erkannt: Unterhalb der Ventilschliessungstemperatur wird lediglich darauf geachtet, ob die Temperatur um einen Betrag TEMP_FALL_OPENING unter die maximale Temperatur fällt. Der Betrag TEMP_FALL_OPENING ist so gewählt, dass normale Temperaturschwankungen im Kochprozess keinen Fehler auslösen. Falls die Temperatur nicht schnell genug sinkt, sondern nur um einen kleineren Betrag TEMP_FALL_MAYBE_OPENING, wird eine Zählervariable inkrementiert, bis diese einen Betrag MISF_LID_OPEN_ACCEPTANCE erreicht.

Oberhalb der Ventilschliessungstemperatur muss auch auf kleinere Temperaturabsenkungen reagiert werden. Dazu ist z.B. folgendes Vorgehen denkbar: Bei eingeschalteter Heizplatte wird untersucht, ob die Temperatur in einem Messzyklus um einen Betrag TEMP_FALL_STEAMING unter der vorhergehenden Temperatur liegt, also ob der Temperaturgradient stark negativ ist. Ist die Heizung ausgeschaltet, wird untersucht, ob der aktuelle Temperaturgradient kleiner als ein Wert RATIO_GRAD_COOL_STEAM multipliziert mit dem gemittelten Abkühlgradienten ist. Der gemittelte Abkühlgradient wird aus vorhergehenden Messungen ermittelt. In diesen zwei Fällen wird ebenfalls ein Zähler inkrementiert, bis er MISF_LID_OPEN_ACCEPTANCE erreicht. Fällt die Temperatur in einem Zyklus hingegen um mehr als TEMP_FALL_SURE_STEAMING unter die vorhergehende Temperatur (d.h. wird der Temperaturgradient sehr stark negativ), wird Abdampfen sofort erkannt.

### Frühe Ventilschliessung

In der Fig. 15 ist mit gestrichelter Linie ein Temperaturverlauf illustriert, wie er bei einer zu frühen Ventilschliessung eintritt. Im Topf aufsteigende Dampfschwaden können durch ihren Druck das Ventil schliessen, noch bevor im Topf ein homogener Überdruck besteht. Bei genügend starker Heizung baut sich schnell Druck auf, und das Ventil fällt nicht mehr auf, obwohl der Wasserdampf im Inneren des Kochtopfs die Luft noch nicht vollständig verdrängt hat. Deshalb kommt dieser Fehler besonders bei wenig Gargut oder Speisen, welche die Wärme schlecht aufnehmen, vor.

Bei normaler Ventilschliessung flacht die Temperaturkurve kurz vor der Ventilschliessung jeweils ein wenig ab, da sich der Wasserdampf bei offenem Ventil nicht über die Siedetemperatur erwärmen kann. Das offene Ventil bildet einen Engpass für den ausströmenden Dampf, und im Topf bildet sich ein kleiner Überdruck. Wie lange es dauert, bis der Dampfdruck ausreicht, um die Verriegelung und das Ventil zu schliessen, ist abhängig von der zugeführten Leistung und der Wärmeaufnahme durch das Gargut. Schliesst das Ventil zu früh, fehlt diese Abflachung, die Temperaturkurve geht wie eine Gerade über die Siedetemperatur hinweg.

Der Fehler wird einmal ausgegeben, wenn die Temperatur den Wert boilLimitHigh überschreitet, keine Ventilschliessung detektiert wurde, und die obere Reglergrenze um TEMP_OFFSET_VALVE_CLOSE_WARN über der Siedetemperatur boilTemp liegt. Ist letzteres nicht der Fall, kann man annehmen, dass das Ventil zwar einen hohen Druck anzeigen wird, dies aber nicht ausreicht, um das Ventil zu öffnen.

Die Ventilschliessung wird dabei normalerweise dadurch detektiert, dass innerhalb des Ventilschliessungsintervalls der Gradient um ein bestimmtes Mass kleiner wird als der mittlere Gradient während der vorangegangenen Aufheizphase.

Aus den voranstehenden Beispielen wird deutlich, dass mit Hilfe des Verlaufs des Temperaturgradienten und/oder der Abweichung von einem Modellverlauf schneller und zuverlässiger auf bestimmte Fehlerzustände geschlossen werden kann, als wenn allein der Temperaturverlauf als solcher betrachtet würde. Dies gilt nicht nur für die vorstehend diskutierten Fehlerzustände, sondern lässt sich auf eine Vielzahl weiterer Fehlerzustände verallgemeinern.

## Patentansprüche

1. Verfahren zur Überwachung eines Garvorgangs in einem Schnellkochtopf, in dem ein Gargut mit Wasser und/oder Wasserdampf bei erhöhter Temperatur und erhöhtem Druck gegart wird, wobei das Verfahren umfasst:
Empfangen von Temperaturdaten, die dem Verlauf der Temperatur im Schnellkochtopf entsprechen;
Überwachung der Temperaturdaten mit einer digitalen Überwachungsvorrichtung, um festzustellen, ob ein Fehlerzustand vorliegt; und
Ausgabe einer Fehlermeldung durch die digitale Überwachungsvorrichtung, wenn der Fehlerzustand festgestellt wird,
**dadurch gekennzeichnet, dass** bei der Überwachung der Temperaturdaten ein Temperaturgradient aus den Temperaturdaten berechnet wird, und dass der zeitliche Verlauf des so berechneten Temperaturgradienten bei der Feststellung, ob ein Fehlerzustand vorliegt, berücksichtigt wird.

2. Verfahren nach Anspruch 1, wobei bei der Überwachung der Temperaturdaten ein Mass für die Abweichung der aktuellen Temperaturdaten, des aktuellen Temperaturgradienten und/oder einer hiervon abgeleiteten Grösse von einem Modellverlauf berechnet wird, und wobei der Verlauf dieses Masses bei der Feststellung, ob ein Fehlerzustand vorliegt, berücksichtigt wird.

3. Verfahren nach Anspruch 1 oder 2, wobei die Temperaturdaten auf das Vorliegen mindestens eines der folgenden Fehlerzustände überwacht werden:
Trockenstart;
Temperaturstagnation während einer Aufheizphase;
Temperatureinbruch während einer Nachheizphase;
Deckelöffnung;
Ventilöffnung;
vorzeitige Ventilschliessung während einer Aufheizphase;
Nichtbefolgen von Handlungsanweisungen durch einen Benutzer.

4. Verfahren nach Anspruch 3, wobei als Fehlerzustand ein Trockenstart anhand des Kriteriums festgestellt wird, dass sich der Temperaturgradient innerhalb einer vorgegebenen Zeitdauer nach Beginn des Garvorgangs nicht verringert.

5. Verfahren nach Anspruch 3 oder 4, wobei als Fehlerzustand eine verfrühte Ventilschliessung während einer Aufheizphase anhand des Kriteriums festgestellt wird, dass sich der Temperaturgradient innerhalb des Ventilschliessungsintervalls nicht verringert.

6. Verfahren nach einem der Ansprüche 3-5, wobei als Fehlerzustand eine Temperaturstagnation unterhalb des Ventilschliessungsintervalls während einer Aufheizphase anhand des Kriteriums festgestellt werden, dass die Temperatur seit Beginn der Aufheizphase um einen vorgegebenen Temperaturdifferenzschwellwert angestiegen ist, aber sich noch unterhalb des Ventilschliessungsintervalls befindet, und wenn mindestens eines der folgenden Kriterien erfüllt ist:
(a) der Temperaturgradient ist kleiner als ein erster Gradientenschwellwert; und/oder
(b) der Temperaturgradient ist kleiner als ein zweiter Gradientenschwellwert, welcher grösser ist als der erste Gradientenschwellwert, und gleichzeitig weist die Temperatur eine Abweichung relativ zu einem Modellverlauf auf, welche grösser als ein Abweichungsschwellwert ist.

7. Verfahren nach einem der Ansprüche 3-6, wobei als Fehlerzustand eine Temperaturstagnation innerhalb des Ventilschliessungsintervalls während einer Aufheizphase festgestellt wird, wenn sich die Temperatur innerhalb des Ventilschliessungsintervalls befindet, und wenn mindestens eines der folgenden Kriterien erfüllt ist:
(a) der Temperaturgradient ist kleiner als ein erster Gradientenschwellwert; und/oder
(b) der Temperaturgradient ist kleiner als ein zweiter Gradientenschwellwert, welcher grösser ist als der erste Gradientenschwellwert, und gleichzeitig weist die Temperatur eine Abweichung gegenüber einem Modellverlauf auf, welche grösser als ein Abweichungsschwellwert ist.

8. Verfahren nach einem der Ansprüche 3-7, wobei als Fehlerzustand eine Temperaturstagnation oberhalb des Ventilschliessungsintervalls während einer Aufheizphase festgestellt wird, wenn sich die Temperatur oberhalb des Ventilschliessungsintervalls befindet, und wenn mindestens eines der folgenden Kriterien erfüllt ist:
(a) der Temperaturgradient ist kleiner als ein erster Gradientenschwellwert; und/oder
(b) der Temperaturgradient ist kleiner als ein zweiter Gradientenschwellwert, welcher grösser ist als der erste Gradientenschwellwert, und gleichzeitig weist die Temperatur eine Abweichung gegenüber einem Modellverlauf auf, welche grösser als ein Abweichungsschwellwert ist; und/oder
(c) der Temperaturgradient ist kleiner als ein vorgegebener Bruchteil eines zuvor bestimmten Temperaturgradienten unterhalb der Ventilschliessungstemperatur.

9. Verfahren nach einem der Ansprüche 3-8, wobei die Überwachung der Temperaturdaten und des Temperaturgradienten eine Ermittlung eines Schwankungsmusters der Temperatur bei nominell konstanter Heizleistung umfasst, und wobei als Fehlerzustand ein Temperatureinbruch während einer Nachheizphase anhand des Kriteriums festgestellt wird, dass die Temperatur bei nominell konstanter Heizleistung um einen Betrag absinkt, der grösser ist als ein sich aus dem Schwankungsmuster ergebender Schwellwert.

10. Verfahren nach einem der Ansprüche 3-9, wobei als Fehlerzustand eine Ventiloder Deckelöffnung anhand eines der folgenden Kriterien festgestellt wird:
(a) die Temperatur sinkt innerhalb einer Aufheiz- oder Nachheizphase um einen Betrag ab, der grösser ist als ein vom Betriebszustand abhängiger Schwellwert, wobei der Temperaturgradient einen Betrag aufweist, der grösser ist als ein vorbestimmter Schwellwert; oder
(b) der Temperaturgradient ist innerhalb einer Abkühlphase negativ und weist einen Betrag auf, der grösser ist als ein vorbestimmter Schwellwert.

11. Verfahren nach einem der vorhergehenden Ansprüche, welches eine Ausgabe von Anweisungen an den Benutzer zur Prüfung von möglichen Fehlerquellen und/oder zur Behebung des Fehlers umfasst, wobei die Anweisungen vom ermittelten Fehlerzustand abhängen.

12. Verfahren nach einem der vorhergehenden Ansprüche, wobei die digitale Überwachungsvorrichtung ein portables elektronisches Gerät ist, das nicht mit dem Schnellkochtopf verbunden ist, und wobei das Verfahren ausserdem umfasst:
Erfassung der Temperaturdaten mittels einer Temperaturmessvorrichtung, die am Schnellkochtopf angebracht ist; und
drahtlose Übertragung der Temperaturdaten von der Temperaturmessvorrichtung an die digitale Überwachungsvorrichtung.

13. Computerprogramm mit Programmcode zur Durchführung des Verfahrens nach einem der Ansprüche 1-11, wenn das Computerprogramm in einer digitalen Überwachungsvorrichtung ausgeführt wird.

14. Digitale Überwachungsvorrichtung zur Überwachung eines Garvorgangs in einem Schnellkochtopf, in dem ein Gargut mit Wasser und/oder Wasserdampf unter erhöhtem Druck gegart wird, mit einem Speicher, in dem ein Computerprogramm geladen ist, welches Programmcode zur Durchführung des Verfahrens nach einem der Ansprüche 1-11 in der digitalen Überwachungsvorrichtung umfasst.

15. Überwachungsvorrichtung nach Anspruch 14, wobei die Überwachungsvorrichtung eine drahtlose Datenkommunikationsschnittstelle umfasst, und wobei das Computerprogramm ausserdem Programmcode zum Empfangen der Temperaturdaten über die drahtlose Datenkommunikationsschnittstelle aufweist.

16. Kit, umfassend:
eine digitale Überwachungsvorrichtung nach Anspruch 15; und
eine Temperaturerfassungseinheit, die an einem Schnellkochtopf anbringbar ist und dazu ausgebildet ist, Temperaturdaten zu erfassen und die Temperaturdaten drahtlos an die drahtlose Datenkommunikationsschnittstelle der digitalen Überwachungsvorrichtung zu übertragen.
